# EUROPEAN PATENT APPLICATION

(11) **EP 4 660 971 A2**
(43) Date of publication of application: **10.12.2025**
(21) Application number: 25210034.2
(22) Date of filing: 21.10.2025
(51) Int. Cl.: G06V 20/56, B60R 1/22, G06V 20/64

(54) **METHOD AND APPARATUS FOR DISPLAYING VEHICLE DRIVING ENVIRONMENT, MEDIUM, AND DEVICE**

(30) Priority: 03.03.2025 CN 202510249433
(71) Applicant: Shanghai Horizon Intelligent Automotive Technology Co., Ltd., Shanghai Jiading District 201800 (CN)
(72) Inventor: CAO, Yanfeng, Shanghai, 201800 (CN); RUI, Shichen, Shanghai, 201800 (CN); ZHANG, Lei, Shanghai, 201800 (CN)
(74) Representative: v. Bezold & Partner Patentanwälte - PartG mbB

(57) **Abstract**

Embodiments of this disclosure disclose a method and apparatus for displaying a vehicle driving environment, medium, and device, wherein the method includes: acquiring first point cloud data at a first moment; classifying the first point cloud data, to obtain second point cloud data containing a type attribute of a point; determining, based on the second point cloud data and point cloud data at a second moment, point cloud data of a driving environment of a vehicle at the first moment, wherein the second moment is a moment before the first moment; and displaying, based on the point cloud data of the driving environment, the driving environment at the first moment. Embodiments of this disclosure enable a user to effectively perceive morphology of an object in an environment around a vehicle, improving an effect of visual expression by a point cloud.

## Description

### TECHNICAL FIELD

This disclosure relates to human machine interaction technology, and more particularly, to a method and apparatus for displaying a vehicle driving environment, medium, and device.

### BACKGROUND

In an intelligent driving scene such as autonomous driving, advanced driver assistance systems (ADAS), etc., visual expression may be performed based on a point cloud. For example, a driving environment around a vehicle is displayed in an interaction interface of the vehicle based on point cloud data acquired by light detection and ranging (LIDAR). In related art, due to impact from factors such as a limited LIDAR angle, a cost, an enormous amount of point cloud data, etc., an effect of point-cloud based visual expression is poor.

### SUMMARY

Embodiments of this disclosure provide a method and apparatus for displaying a vehicle driving environment, medium, and device, enabling a user to effectively perceive morphology of an object in an environment around a vehicle, thereby improving an effect of visual expression by a point cloud.

In a first aspect of embodiments of this disclosure, there is provided a method for displaying a vehicle driving environment, including: acquiring first point cloud data at a first moment; classifying the first point cloud data, to obtain second point cloud data containing a type attribute of a point; determining, based on the second point cloud data and point cloud data at a second moment, point cloud data of a driving environment of a vehicle at the first moment, wherein the second moment is a moment before the first moment; and displaying, based on the point cloud data of the driving environment, the driving environment at the first moment.

In a second aspect of embodiments of this disclosure, there is provided an apparatus for displaying a vehicle driving environment, including: an acquiring module, configured for acquiring first point cloud data corresponding to a first moment; a first processing module, configured for classifying the first point cloud data, to obtain second point cloud data containing a type attribute of a point; a second processing module, configured for determining, based on the second point cloud data and point cloud data at a second moment, point cloud data of a driving environment of a vehicle at the first moment, wherein the second moment is a moment before the first moment; and a third processing module, configured for displaying, based on the point cloud data of the driving environment, the driving environment at the first moment.

In a third aspect of embodiments of this disclosure, there is provided a computer-readable storage medium, storing a computer program thereon, which, when executed by a processor, causes the processor to implement the method for displaying a vehicle driving environment according to any one of embodiments of this disclosure.

In a fourth aspect of embodiments of this disclosure, there is provided an electronic device, including: a processor; and a memory configured for storing processor-executable instructions, wherein the processor is configured for reading from the memory and executing the processor-executable instructions to implement the method for displaying a vehicle driving environment according to any one of embodiments of this disclosure.

In a fifth aspect of embodiments of this disclosure, there is provided a computer program product, comprising instructions which, when executed by a processor, caused the processor to implement the method for displaying a vehicle driving environment according to any one of embodiments of this disclosure.

Based on the method and apparatus for displaying a vehicle driving environment, medium, and device according to embodiments of this disclosure, by classifying point cloud data, semantic types of points in point cloud data may be obtained, and when displaying the driving environment based on the point cloud data, morphology of an object in the environment may be shown effectively based on the semantic types, thereby improving an effect of visual expression by a point cloud. Then, a range of environment expressible by the point cloud may be extended in combination with point cloud data at the first moment and second moment, thereby facilitating expressing a state of a global environment around the vehicle, and further improving the effect of visual expression by the point cloud.

### BRIEF DESCRIPTION OF DRAWINGS

FIG. 1 is an illustrative application scene of a method for displaying a vehicle driving environment according to this disclosure;
FIG. 2 is a schematic flowchart of a method for displaying a vehicle driving environment according to an illustrative embodiment of this disclosure;
FIG. 3 is a schematic diagram of a display interface for displaying a driving environment according to an illustrative embodiment of this disclosure;
FIG. 4 is a schematic flowchart of a method for displaying a vehicle driving environment according to another illustrative embodiment of this disclosure;
FIG. 5 is a schematic flowchart of a method for displaying a vehicle driving environment according to yet another illustrative embodiment of this disclosure;
FIG. 6 is a schematic flowchart of a method for displaying a vehicle driving environment according to still another illustrative embodiment of this disclosure;
FIG. 7 is a schematic flowchart of sparsifying a point cloud according to an illustrative embodiment of this disclosure;
FIG. 8 is a schematic flowchart of a method for displaying a vehicle driving environment according to yet another illustrative embodiment of this disclosure;
FIG. 9 is a schematic diagram of a display interface for displaying a driving environment according to another illustrative embodiment of this disclosure;
FIG. 10 is a schematic structural diagram of an apparatus for displaying a vehicle driving environment according to an illustrative embodiment of this disclosure;
FIG. 11 is a schematic structural diagram of an apparatus for displaying a vehicle driving environment according to another illustrative embodiment of this disclosure;
FIG. 12 is a structural diagram of an electronic device according to embodiments of this disclosure.

### DETAILED DESCRIPTION OF THE EMBODIMENTS

To explain this disclosure, illustrative embodiments of this disclosure are elaborated below with reference to accompanying drawings. Clearly, the embodiments described are merely some, rather than all, embodiments of this disclosure. It should be understood that this disclosure is not limited to the illustrative embodiments.

It should be noted that unless otherwise specified, the scope of this disclosure is not limited to relative arrangements of components and steps, numeric expressions, and numerical values described in these embodiments.

### Disclosure overview

In implementing this disclosure, the inventor discovers that in an intelligent driving scene such as autonomous driving, advanced driver assistance systems (ADAS), etc., visual expression may be performed based on a point cloud. For example, a driving environment around a vehicle is displayed in an interaction interface of the vehicle based on point cloud data acquired by light detection and ranging (LIDAR). In related art, due to impact from factors such as a limited LIDAR angle, a cost, an enormous amount of point cloud data, etc., an effect of point-cloud based visual expression is poor. For example, with a limited LIDAR scan angle, merely a point cloud of some area in front of the vehicle may be produced, and thus merely the environment of some area in front of the vehicle may be expressed.

### Illustrative overview

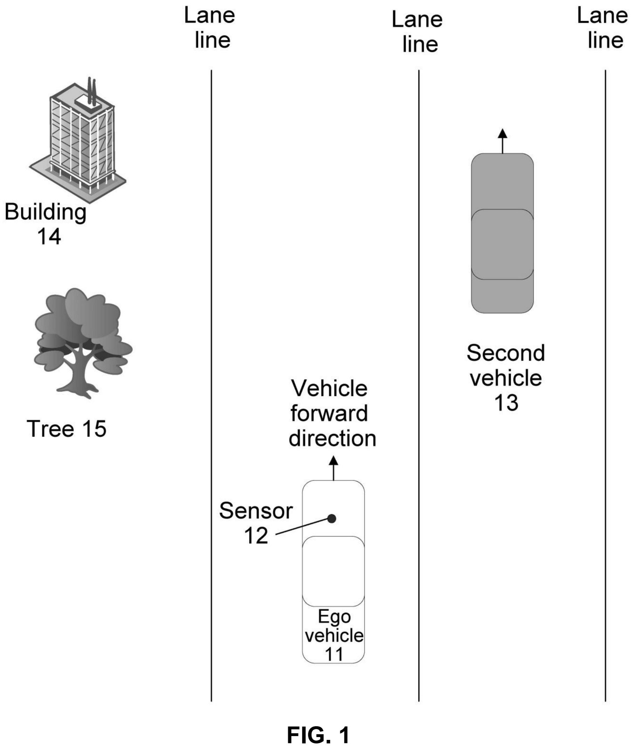

FIG. 1 is an illustrative application scene of a method for displaying a vehicle driving environment according to this disclosure. As shown in FIG. 1, while a vehicle (i.e., ego vehicle) 11 drives on a road, point cloud data may be acquired based on a sensor 12 on ego vehicle 11. For example, point cloud data at a current moment may be obtained in real time, and then, a driving environment of ego vehicle 11 may be displayed using the method for displaying a vehicle driving environment according to embodiments of this disclosure, thereby enabling a user in the vehicle to effectively perceive, through the displayed driving environment, the environment around ego vehicle 11, such as to check other vehicles (such as non-ego vehicle 13 in the figure) around ego vehicle 11, a building 14 and/or a tree 15 beside the road, etc. Specifically, first point cloud data at a first moment may be obtained, and the first moment may be any moment (for example, the first moment may be a current moment or a historical moment). Then, the first point cloud data may be classified, to obtain second point cloud data containing a type attribute of a point; point cloud data of a driving environment of a vehicle at the first moment may be determined based on the second point cloud data and point cloud data at a second moment, and the second moment is a moment before the first moment (for example, the first moment is the current moment, and the second moment is a historical moment). After that, the driving environment at the first moment may be displayed based on the point cloud data of the driving environment. The point cloud data of the driving environment contain type attributes (i.e., semantic types) of the points, that is, that the points belong to the second vehicle 13, the building 14, the tree 15, or a road surface, etc., such that rendering and displaying may be performed based on the type attributes of the points when displaying the driving environment, thereby enabling the displayed driving environment to effectively express morphology of an object, such as morphology of the second vehicle 13, morphology of the building 14, morphology of the tree 15, etc., and effectively improving the effect of visual expression. In addition, the point cloud data of the driving environment at the first moment are determined combining point cloud data at a plurality of moments, and for ego vehicle 11 at the first moment, point cloud data at different moments represent environment of different ranges around ego vehicle 11 at the first moment. Therefore, it is enabled to effectively express a state of an overall environment around ego vehicle 11 at the first moment, thereby further improving the effect of visual expression.

### Illustrative method

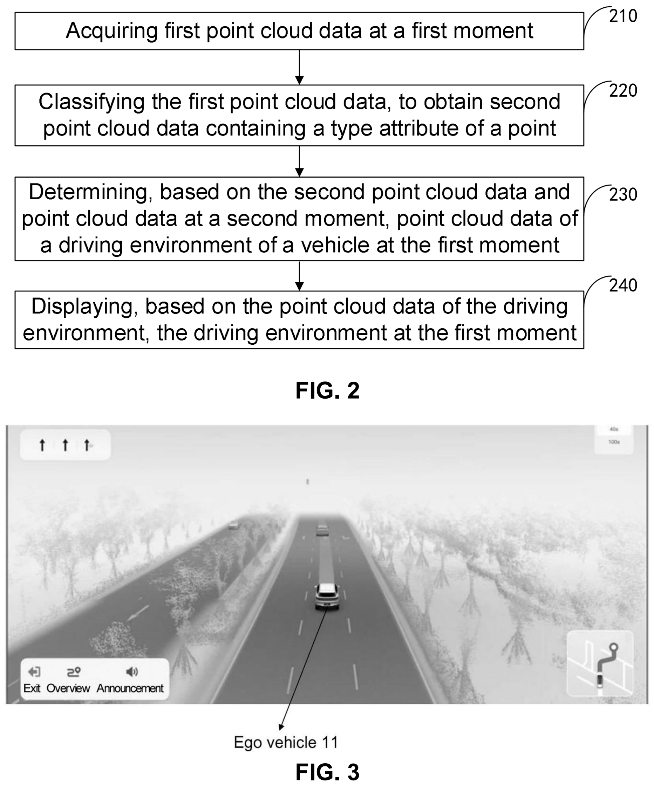

FIG. 2 is a schematic flowchart of a method for displaying a vehicle driving environment according to an illustrative embodiment of this disclosure. This embodiment is applicable to an electronic device, such as an onboard computing platform (also referred to as an onboard terminal). As shown in FIG. 2, the method according to embodiments of this disclosure may include steps as follows.

Step 210, Acquiring first point cloud data at a first moment.

The first moment may be any moment while the vehicle drives. For example, the first moment may be the current moment or any historical moment. The first point cloud data may be data acquired based on a sensor on the vehicle.

In some optional embodiments, the first point cloud data may be acquired through LIDAR. Alternatively, data acquired through another sensor may be converted into the first point cloud data. Alternatively, the first point cloud data are obtained combining LIDAR and another sensor. And the way in which the point cloud data are obtained is not restricted

Step 220, Classifying the first point cloud data, to obtain second point cloud data containing a type attribute of a point.

The type attribute of a point refers to a type of an object to which the point belongs. In some optional embodiments, the object may include a plurality of points. And the point cloud data may include type attributes of the plurality of points. Alternatively, the point cloud data may include types of one or more objects. The type attributes may include types of various objects which may exist in a real driving environment, and the objects may include a dynamic object and/or static object. The dynamic object for example is an object which may move, such as a further vehicle, a pedestrian, a cyclist, an animal, etc., around the ego vehicle, whereas the static object for example is an object which is static, such as a building, a tree, a road, etc. To simplify, the following will illustrate the concepts of the disclosure using a point and an object as an example. However, the present disclosure is not limited to the following embodiments.

In some optional embodiments, the first point cloud data may be classified based on a preconfigured point cloud classifying model, to obtain the second point cloud data containing the type attribute of the point. Any model that can be implemented may be used as the point cloud classifying model, which is not limited in embodiments of this disclosure.

In some optional embodiments, the step 220 of classifying the first point cloud data, to obtain second point cloud data containing a type attribute of a point may include:

acquiring image data at the first moment; classifying the first point cloud data based on the image data and the first point cloud data, to obtain a type attribute corresponding to a point in the first point cloud data; and acquiring the second point cloud data based on the first point cloud data and the type attribute corresponding to the point.

The image data may be obtained through a cam on the vehicle. Classification of the first point cloud data combining content of monitoring the environment in the image data helps improve accuracy of a result of classifying the first point cloud data.

In some optional embodiments, the image data and the first point cloud data may be processed based on a multimodal classifying model trained in advance, to obtain the type attribute corresponding to the point in the first point cloud data. Multimodal refers to that an input includes data of multiple modalities, and a kind of sensor may correspond to one modality, and different sensor data belong to data of different modalities. For example, point cloud data are data of one modality, whereas image data are data of another modality.

Step 230, Determining, based on the second point cloud data and point cloud data at a second moment, point cloud data of a driving environment of a vehicle at the first moment.

The second moment is a moment before the first moment. For example, the first moment is denoted by moment t, and the second moment may be moment t-1, moment t-2, moment t-3, etc. A number of second moments is not limited. The point cloud data of the driving environment of the vehicle at the first moment refers to point cloud data of the environment around the vehicle at the first moment, such as point cloud data of the environment in directions, e.g., in front of, behind, to the left of, and/or to the right of, the vehicle, etc.

In some optional embodiments, the point cloud data of the driving environment of the vehicle at the first moment may be point cloud data in a preset range around the vehicle at the first moment. The preset range may be determined based on a perception range of a sensor on the vehicle. For example, the preset range may be a range from d₁ meters behind the vehicle to d₂ meters in front of the vehicle, and from d₃ meters to the left of the vehicle to d₄ meters to the right of the vehicle.

In some optional embodiments, the number of second moments may be determined based on the preset range, thereby reducing fusion of unnecessary point cloud data. For example, as the vehicle drives, the number of historical moments of the current moment (the first moment) keeps increasing, point cloud data at a historical moment with a great separation time to the current moment are no longer in the range of the driving environment at the current moment. Therefore, one or a plurality of second moments close to the first moment may be determined, for determining the point cloud data of the driving environment at the first moment. In some optional embodiments, the number of second moments may be an integer greater than 1. That is, a plurality of second moments close to the first moment may be used. And thus point cloud data at a second moment may comprise one or a plurality of point cloud data at the second moment.

In some optional embodiments, point cloud data at a second moment may be point cloud data containing the type attribute. For example, point cloud data at the second moment may be point cloud data obtained by classifying point cloud data acquired at the second moment.

In some optional embodiments, any point cloud data at the second moment may be single frame point cloud data at the second moment. The single frame point cloud data may be point cloud data containing the type attribute. For example, at the second moment, the acquired point cloud data are classified, to obtain the single frame point cloud data containing the type attribute, and the single frame point cloud data containing the type attribute may be stored. Then, at the first moment, the second point cloud data at the first moment and the point cloud data at the second moment are fused, to obtain a great range of point cloud data at the first moment, for determining the point cloud data of the driving environment of the vehicle.

In some optional embodiments, any point cloud data at the second moment may be fused point cloud data at the second moment. Fused point cloud data at the second moment refers to point cloud data obtained by fusing the single frame point cloud data at the second moment and point cloud data at at least one moment before the second moment. That is, any point cloud data at the second moment may be point cloud data of an overall range around the ego vehicle at the second moment. For example, at starting moment T₀, point cloud data of a 0-th frame are obtained; at moment T₁, point cloud data of a 1-st frame are obtained, the point cloud data of the 1-st frame and the point cloud data of the 0-th frame are fused, and the point cloud data obtained by fusing are set as the point cloud data at moment T₁; at moment T₂, point cloud data of a 2-nd frame are obtained, the point cloud data of the 2-nd frame and the point cloud data at moment T₁ are fused, and the point cloud data obtained by fusing are set as the point cloud data at moment T₂, and so on. As the point cloud data of the 0-th frame have been fused in the point cloud data at moment T₁, the point cloud data of the 2-nd frame may just be fused with the point cloud data at moment T₁. Of course, the point cloud data of the 2-nd frame may also be fused with the point cloud data at moment T₁ and the point cloud data at moment T₀, and the specific details thereof are not limited. Optionally, single frame point cloud data at a moment may be point cloud data containing the type attribute.

In some optional embodiments, in case that point cloud data at the second moment is fused point cloud data, the point cloud data of the driving environment of the vehicle at the first moment may be determined based on the second point cloud data and point cloud data at a second moment closest to the first moment.

In some optional embodiments, in fusing the second point cloud data and the point cloud data at the second moment, static point cloud data may be extracted from the point cloud data at the second moment, and the static point cloud data at the second moment are fused with the second point cloud data, thereby preventing movement of dynamic point cloud data therein from adversely impacting a result of fusion, and improving the accuracy of dynamic point cloud data perceived at the first moment. Optionally, a position, at the first moment, of a point in the dynamic point cloud data in the point cloud data at the second moment may be predicted based on a state of movement of a dynamic object corresponding to the dynamic point cloud data perceived, and the dynamic point cloud data at the second moment are aligned with the first moment, for fusing with the second point cloud data. The static point cloud data at the second moment and the second point cloud data may be unified to the same coordinate system by coordinate transformation between coordinate systems, to be fused in the same coordinate system. Optionally, a relation of coordinate transformation between a coordinate system at the second moment and a coordinate system at the first moment may be determined based on a parameter of movement of the ego vehicle and a time difference. For example, relative pose of the ego vehicle at the first moment relative to the second moment may be determined based on the parameter of movement of the ego vehicle and the time difference, the relative pose representing translation and rotation of the coordinate system at the first moment relative to the second moment, thereby enabling to determine the relation of coordinate transformation between the coordinate system at the second moment and the coordinate system at the first moment, and then transform the static point cloud data at the second moment to the coordinate system at the first moment based on the relation of coordinate transformation. Alternatively, the relation of coordinate transformation between the coordinate system at the second moment and the coordinate system at the first moment may be determined based on pose of the ego vehicle at the second moment, and pose of the ego vehicle at the first moment. Pose of the ego vehicle at any moment is pose of the ego vehicle in a global coordinate system (such as a world coordinate system or a coordinate system of the ego vehicle corresponding to a starting position of the ego vehicle), and represents an extrinsic parameter of the ego vehicle relative to the global coordinate system, thereby determining the relation of coordinate transformation between the coordinate system at the second moment and the coordinate system at the first moment taking the global coordinate system as a reference. The pose of the ego vehicle at any moment may be determined through a positioning algorithm.

In some optional embodiments, in addition to containing the type attribute of the point, the point cloud data of the driving environment may further contain a state attribute of the point. For example, the state attribute may include at least one of a colour attribute, a size attribute, a transparency attribute, etc., of the point. The colour attribute of the point may be configured for displaying colour of the object, the transparency attribute of the point may be configured for displaying blockage between objects at different positions, the size attribute of the point may be configured for representing how far away the point is, thereby enabling to further improve a visual effect of expressing an object by a point cloud through the state attribute of the point in the point cloud data.

In some optional embodiments, a point may be expanded into a sphere or another shape having a certain size in three-dimensional space through the size attribute of the point, such that the point in the point cloud data of the driving environment is of a three-dimensional shape (such as a sphere) having a certain size, and when displayed, a close point may occupy a great area (or a lot of pixels) in a displayed picture, whereas a faraway point may occupy less area (or fewer pixels), thereby enabling to produce a sense of distance in a displayed point by the distance of the displayed points in the distinguished size.

In some optional embodiments, rather than expanding the point in the three-dimensional space, the size attribute of the point may be reserved, and in 3D rendering, a size of an area (or a number of pixels) occupied by the point in the displayed picture may be determined based on the size attribute of the point. For example, a point is projected onto the displayed picture, to obtain a projection point of the point in the displayed picture, and an area centered on the projection point and occupied by the point in the displayed picture is determined based on the size of the area occupied by the point in the displayed picture. For example, the point is displayed as a circular area having a certain size in the displayed picture.

Step 240, Displaying, based on the point cloud data of the driving environment, the driving environment at the first moment.

The driving environment at the first moment may be displayed in a display screen of the vehicle. The display screen of the vehicle may be any display screen in the vehicle, such as a central control screen, a head-up display (HUD), a driver human-machine interface (HMI), a passenger HMI, etc.

In some optional embodiments, point cloud data which is within a specified display range may be determined from the point cloud data of the driving environment based on the display range; a relation of coordinate transformation from a coordinate system corresponding to the point cloud data (such as a coordinate system of the ego vehicle at the first moment) to a coordinate system corresponding to a virtual camera may be determined based on a preconfigured camera parameter of the virtual camera relative to the ego vehicle; the point cloud data within the display range may be transformed to the coordinate system corresponding to the virtual camera based on the relation of coordinate transformation, and then projected to an image coordinate system of the virtual camera, to generate the displayed picture; and the displayed picture may be displayed, thereby implementing display of the driving environment. The virtual camera is an observing camera configured for 3D rendering of the driving environment. That is, taking the virtual camera as an observing angle of view, observation of environment of a certain range around the ego vehicle is performed at the virtual camera by simulating a user eye, thereby enabling a user to observe an overall driving environment through the displayed picture. The virtual camera may be located at a specified position in the upper back of the ego vehicle. The parameter of the virtual camera includes an extrinsic parameter and an intrinsic parameter, which may be calibrated in advance as needed. A specific mode of display is not limited to a foregoing mode, which is not repeated here.

In some optional examples, FIG. 3 is a schematic diagram of a display interface for displaying a driving environment according to an illustrative embodiment of this disclosure. As shown in FIG. 3, the environment around ego vehicle 11 includes a tree, a further vehicle, a lane line, a road surface, a curb, etc., and visual expression by a point cloud is performed based on the method according to embodiments of this disclosure, thereby enabling to display the state of the overall environment around ego vehicle 11, and effectively displaying morphology of an object in the environment.

Optionally, in actual application, display of the driving environment may further be performed combining a map and/or a perception result from another sensor, such as a navigation map at a lower right corner and a lane indicator at an upper left corner in the figure. Another sensor for example is a cam, with specific content displayed being not limited. For example, a lane line, a lane, etc., may be perceived combining image data acquired by the cam, and rendered in the displayed picture. The ego vehicle may be taken as a reference for a display range of the displayed picture, that is, the ego vehicle may always be displayed at a specified position in the displayed picture, and the environment around the ego vehicle may be displayed as actual point cloud data change dynamically.

With the method for displaying a vehicle driving environment according to this embodiment, by classifying point cloud data at the first moment, semantic types of points in the point cloud data may be obtained, and when displaying the driving environment based on the point cloud data, morphology of an object in the environment may be shown effectively based on the semantic types, thereby improving an effect of visual expression by a point cloud. Then, the point cloud data of the driving environment at the first moment are determined combining point cloud data at the first moment and at least one second moment, and for the vehicle at the first moment, point cloud data at different moments may represent environment of different ranges around the vehicle at the first moment. Therefore, it is enabled to effectively express a state of an overall environment or environment of a great range around the vehicle at the first moment, further improving the effect of visual expression.

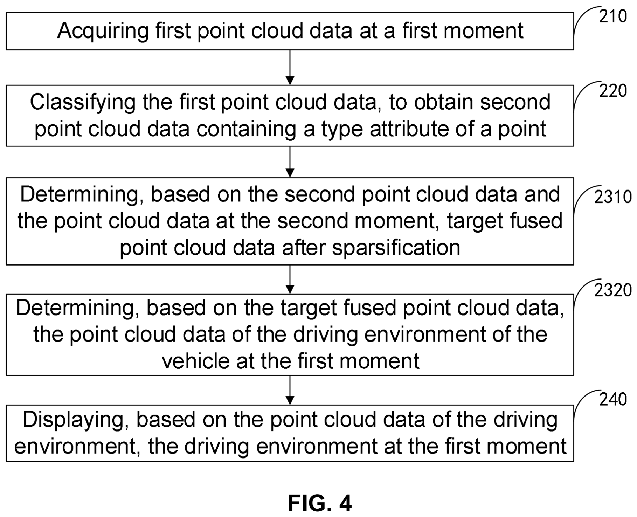

FIG. 4 is a schematic flowchart of a method for displaying a vehicle driving environment according to another illustrative embodiment of this disclosure.

In some optional embodiments, based on the embodiment shown in FIG. 2, as shown in FIG. 4, the step 230 of determining, based on the second point cloud data and point cloud data at a second moment, point cloud data of a driving environment of a vehicle at the first moment may include steps as follows.

Step 2310, Determining, based on the second point cloud data and the point cloud data at the second moment, target fused point cloud data after sparsification.

Sparsification refers to reducing a number of points in point cloud data, to remove a redundant point while ensuring that the point cloud data can effectively represent morphology of an object.

In some optional embodiments, the second point cloud data and the point cloud data at the second moment may first be fused, and then, fused point cloud data are sparsified, to obtain the target fused point cloud data. Alternatively, the second point cloud data may first be sparsified, and then, the sparsified point cloud data and the point cloud data at the second moment are fused, to obtain the target fused point cloud data. For example, in case the point cloud data at the second moment are already a sparsified point cloud, sparsifying the point cloud data at the second moment again at the first moment may be avoided. Then, the second point cloud data at the first moment may first be sparsified, and then, the sparsified point cloud data and the point cloud data at the second moment may be fused. That is, an order in which sparsification and fusion are performed is not limited.

In some optional embodiments, the second point cloud data or the fused point cloud data may be sparsified based on a preconfigured sparsification rule. The sparsification rule may be set based on a factor such as point densities needed for different types of objects, and different degrees of interest of areas of the driving environment, etc. For example, a high point density may be ensured for an area of key interest (such as an area in front of the ego vehicle or another area), and a low point density may be set for an area of a low degree of interest. Corresponding point densities may be set for object point clouds of different type attributes. The specific sparsification rules are not limited.

Step 2320, Determining, based on the target fused point cloud data, the point cloud data of the driving environment of the vehicle at the first moment.

In some optional embodiments, after the target fused point cloud data have been obtained, the target fused point cloud data may be determined to be the point cloud data of the driving environment of the vehicle at the first moment.

In some optional embodiments, the target fused point cloud data may further be processed, to obtain the point cloud data of the driving environment of the vehicle at the first moment. For example, the target fused point cloud data are further made three-dimensional, to obtain the point cloud data of the driving environment, thereby enabling a stronger sense of space of the displayed driving environment, and further improving the effect of visual expression. Processing of making three-dimensional for example may include a gradient of colour of point cloud data, a gradient of size of points in point cloud data, etc.

With embodiments of this disclosure, by sparsifying point cloud data, it is enabled to effectively reduce the number of points in the point cloud data, thereby avoiding a great load on an onboard displaying system brought about by displaying the point cloud in full amount, reducing occupation of a storage space, and improving display processing efficiency.

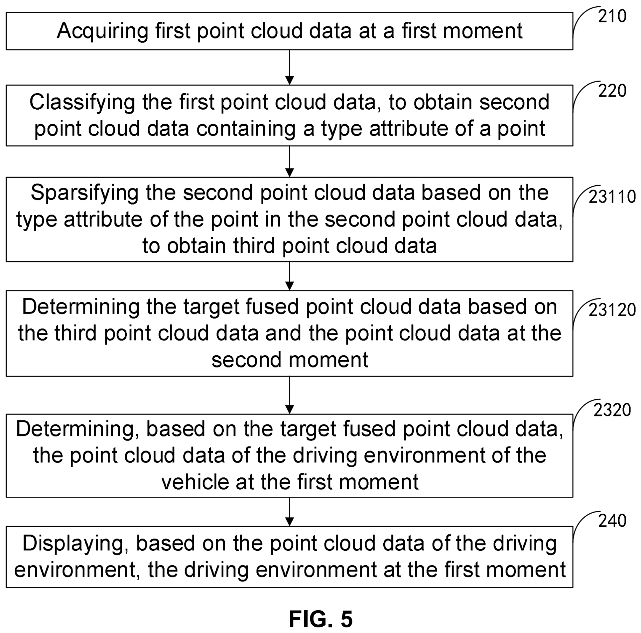

FIG. 5 is a schematic flowchart of a method for displaying a vehicle driving environment according to yet another illustrative embodiment of this disclosure.

In some optional embodiments, as shown in FIG. 5, the step 2310 of determining, based on the second point cloud data and the point cloud data at the second moment, target fused point cloud data after sparsification may include steps as follows.

Step 23110, Sparsifying the second point cloud data based on the type attribute of the point in the second point cloud data, to obtain third point cloud data.

The type attribute of a point represents a type of an object to which the point belongs. And lowest point densities needed for objects of different types may be set respectively, and the second point cloud data may be sparsified while ensuring that the densities needed for objects of the types are met, to obtain the third point cloud data. For example, points in a point cloud of the same type attribute are sampled based on a certain spacing; and for a plurality of close points, merely one or a fewer points as reserved point(s) are sampled, with the remaining points being removed, thereby reducing the number of points. The specific modes of sparsification are not limited.

Step 23120, Determining the target fused point cloud data based on the third point cloud data and the point cloud data at the second moment.

Point cloud data at a second moment may be sparsified data at the second moment, and the third point cloud data and the point cloud data at the second moment may be fused, to obtain the target fused point cloud data.

In some optional embodiments, the static point cloud data in the point cloud data at the second moment may be fused with the third point cloud data, to obtain the target fused point cloud data. Optionally, positions, at the first moment, of the dynamic point cloud data in the point cloud data at the second moment may be predicted through a state of movement of the dynamic point cloud data, and then the dynamic point cloud data at the second moment may be aligned with the first moment, and be in the same coordinate system as the third point cloud data, to obtain aligned dynamic point cloud data. The static point cloud data in the point cloud data at the second moment are transformed to the same coordinate system as the third point cloud data, and the aligned dynamic point cloud data, the static point cloud data, and the third point cloud data are fused, to obtain the target fused point cloud data.

With embodiments of this disclosure, by sparsifying point cloud data, it is enabled to effectively reduce the number of points in the point cloud data, thereby avoiding a great load on an onboard displaying system brought about by displaying the point cloud in full amount, reducing occupation of a storage space, and improving display processing efficiency. In addition, in case that the point cloud data at the second moment are sparsified point cloud data, at the first moment, merely the second point cloud data at the first moment may be sparsified, thereby avoiding unnecessary sparsification processing on the point cloud data at the second moment, and improving sparsification processing efficiency.

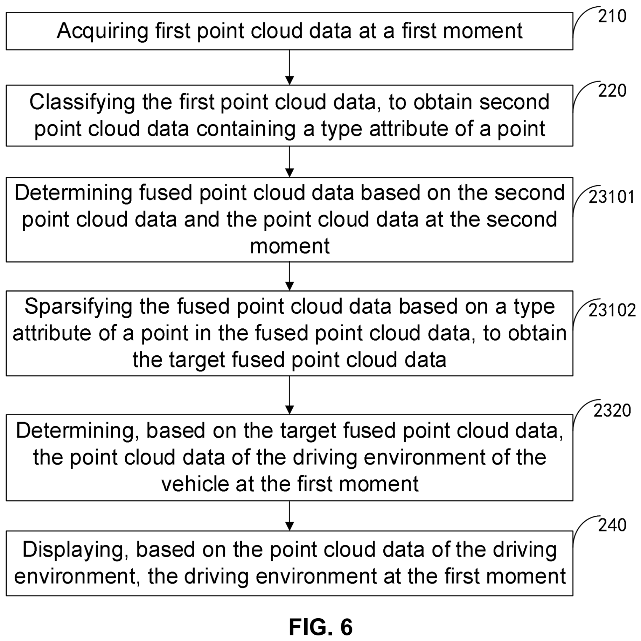

FIG. 6 is a schematic flowchart of a method for displaying a vehicle driving environment according to still another illustrative embodiment of this disclosure.

In some optional embodiments, as shown in FIG. 6, the step 2310 of determining, based on the second point cloud data and the point cloud data at the second moment, target fused point cloud data after sparsification may include steps as follows.

Step 23101, Determining fused point cloud data based on the second point cloud data and the point cloud data at the second moment.

For a specific operation of fusing the second point cloud data and the point cloud data at the second moment, one may refer to a foregoing embodiment, which is not repeated here.

Step 23102, Sparsifying the fused point cloud data based on a type attribute of a point in the fused point cloud data, to obtain the target fused point cloud data.

For a specific operation of sparsifying the fused point cloud data, one may refer to an operation of sparsifying the second point cloud data, which is not repeated here.

In some optional embodiments, in case that the point cloud data at the second moment are dense point cloud data, the second point cloud data and the point cloud data at the second moment may first be fused, to obtain the fused point cloud data, and then the fused point cloud data are sparsified, to obtain the target fused point cloud data.

In some optional embodiments, in case that the point cloud data at the second moment are sparsified point cloud data, by fusing the second point cloud data and the point cloud data at the second moment to obtain the fused point cloud data, and then sparsifying the fused point cloud data, point cloud data in an overlap area in the second point cloud data and the point cloud data at the second moment may again be sparsified, thereby further reducing the number of points in the overlap area.

With embodiments of this disclosure, the target fused point cloud data are obtained in a mode of fusion-first-then-sparsification, thereby ensuring an overall effect of sparsifying the target fused point cloud data, avoiding overly dense points in the overlap area in the point cloud data at the first moment and the at point cloud data at the second moment, further reducing the number of points in the overlap area, and improving display performance.

In some optional embodiments, based on a foregoing embodiment, the step 23110 of sparsifying the second point cloud data based on the type attribute of the point in the second point cloud data, to obtain third point cloud data may include:

determining, based on the type attribute of the point in the second point cloud data, a first sampling density corresponding to the type attribute; and/or determining, based on a current pose of the vehicle, a view range of a virtual camera configured for observing the driving environment, and determining, based on the view range, a second sampling density of the second point cloud data; and sampling the second point cloud data based on the first sampling density and/or the second sampling density, to obtain the third point cloud data.

The first sampling density corresponding to any type attribute is a density threshold of sampling which meets a point density needed for an object corresponding to the type attribute, and the first sampling density serves as a constraining condition on sparsifying point cloud data corresponding to a type attribute, to make the density of the sparsified point cloud close to the first sampling density. The current pose of the vehicle are the pose of the vehicle at the first moment, and the virtual camera is a camera set in advance which has a fixed view range relative to the ego vehicle, such as a camera in the upper back of the ego vehicle configured for observing the environment including the ego vehicle and a preset range around the ego vehicle, referring to the observing angle of view of the displayed picture shown in FIG. 3. The camera may not exist on an actual vehicle, and the virtual camera is configured for rendering the displayed picture, referring to rendering related content of a foregoing embodiment.

In some optional embodiments, a range around the ego vehicle may be divided into subareas of different levels based on the view range of the virtual camera and degrees of interest in environment in different ranges. For example, an area of key interest is set to be a subarea of a first level, for which a high sampling density is set, and after the subarea of the first level, one or a plurality of subareas of other levels may be set, with a specific number of levels not limited. Different second densities of sampling may be set for subareas of different levels.

In some optional embodiments, the second point cloud data may be downsampled based on at least one of the first sampling density and the second sampling density, to obtain the third point cloud data.

With embodiments of this disclosure, sparsification of the second point cloud data is constrained by the first sampling density corresponding to a type attribute, which ensures that the sparsified point cloud meets densities needed for various types of objects; and the second sampling density is determined through the view range of the virtual camera, and constrains sparsification of the second point cloud data, which ensures that the sparsified point cloud meets densities needed for interested areas of different importance, thereby ensuring the effect of visual expression while greatly reducing the number of points.

In some optional embodiments, the step 23110 of sparsifying the second point cloud data based on the type attribute of the point in the second point cloud data, to obtain third point cloud data includes:
determining, based on the type attribute of the point in the second point cloud data, a first sampling density corresponding to the type attribute; and sampling the second point cloud data based on the first sampling density, to obtain the third point cloud data.

For a specific sampling operation, one may refer to a foregoing embodiment.

In some optional embodiments, the step 23110 of sparsifying the second point cloud data based on the type attribute of the point in the second point cloud data, to obtain third point cloud data includes:

determining, based on a current pose of the vehicle, a view range of a virtual camera configured for observing the driving environment; determining, based on the view range, a second sampling density of the second point cloud data; and sampling the second point cloud data based on the second sampling density, to obtain the third point cloud data.

For a specific sampling operation, one may refer to a foregoing embodiment.

In some optional embodiments, the step 23110 of sparsifying the second point cloud data based on the type attribute of the point in the second point cloud data, to obtain third point cloud data includes:
determining, based on the type attribute of the point in the second point cloud data, a first sampling density corresponding to the type attribute; determining, based on a current pose of the vehicle, a view range of a virtual camera configured for observing the driving environment; determining, based on the view range, a second sampling density of the second point cloud data; and sampling the second point cloud data based on the first sampling density and the second sampling density, to obtain the third point cloud data.

For some point cloud in the second point cloud data which both has a type attribute and belongs to a subarea of the view range, a sampling density, as a sampling density of the point cloud, which meets both the type attribute and a density needed for the subarea may be determined combining the first sampling density and the second sampling density. For example, if the first sampling density is less than the second sampling density, the second sampling density is used as the sampling density of the point cloud, ensuring that densities of sparsified point clouds of different types and different subareas are in a range needed, avoiding impacting a display effect. The greater the sampling density is, the more points reserved after sparsification, and the better the display effect. Therefore, first densities of sampling corresponding to different type attributes and second densities of sampling corresponding to different visual subareas may be set based on experience in balancing the display effect and the load, ensuring a good display effect while greatly lowering the number of points.

In some optional embodiments, based on any foregoing embodiment, the determining, based on the view range, a second sampling density of the second point cloud data may include:
determining, based on the view range, sub-point cloud data of at least one level from the second point cloud data; and determining, based on a level of the sub-point cloud data, a second sampling density of the sub-point cloud data.

Subareas of different levels may be set based on importance of different areas in the view range, and the subarea corresponds to one group of sub-point cloud data. Subareas of different levels correspond to different second densities of sampling. The number of levels may be 2, 3, 4, etc., and is specifically not limited.

With embodiments of this disclosure, by dividing the view range of the virtual camera into different levels, it is enabled to reserve a great density for an area of key interest, and use a small density for an area of secondary interest, thereby reducing the number of points as much as possible while ensuring the display effect.

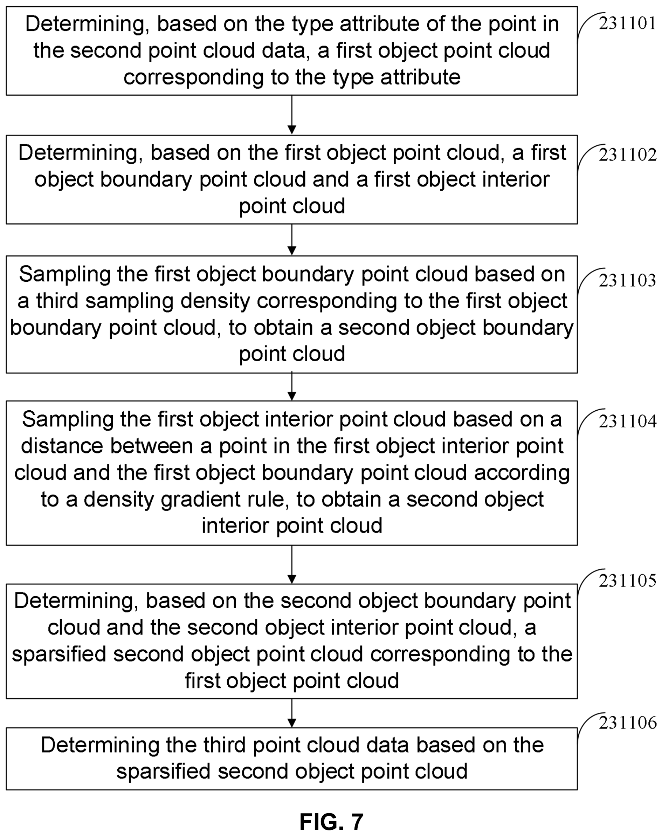

FIG. 7 is a schematic flowchart of sparsifying a point cloud according to an illustrative embodiment of this disclosure.

In some optional embodiments, based on any foregoing embodiment, the step 23110 of sparsifying the second point cloud data based on the type attribute of the point in the second point cloud data, to obtain third point cloud data may include steps as follows.

Step 231101, Determining, based on the type attribute of the point in the second point cloud data, a first object point cloud corresponding to the type attribute.

First object point cloud corresponding to any type attribute refers to a point set in the second point cloud data which belongs to the same object of the type attribute.

In some optional embodiments, a type attribute may correspond to first object point cloud of one or a plurality of objects.

In some optional embodiments, for a point set in the second point cloud data which corresponds to the same type attribute, a first object point cloud in the point set which belongs to an object may be determined. For example, the second point cloud data includes one or a plurality of objects of the same type, such as a plurality of trees, a plurality of buildings, etc., and after the point cloud corresponding to the type attribute has been determined based on the type attributes, the first object point cloud corresponding to the object may be determined by clustering or in another mode.

In some optional embodiments, a type attribute may include a type of an object to which a point belongs and an object identification (such as an object ID). That is, a plurality of objects belonging to the same type may have different IDs. The first object point cloud corresponding to the object in the type attribute may be determined based on the type of the object and the object identification. Optionally, for a type of an object, a type of objects may correspond to one type, or one object may correspond to one type. For example, a plurality of buildings correspond respectively to different types.

In some optional embodiments, the type of the same object may be denoted by the type of at least one level. For example, an object corresponds to a first-level type, whereas different parts of the object may correspond to different second-level types. For example, a tree is of the first-level type, and the tree includes parts such as leaves, a trunk, flowers, etc., which may correspond respectively to different second-level types, such that when displayed, corresponding states may be displayed for the different parts. For example, the leaves are displayed in green, the trunk is displayed in grey, and the flowers are displayed in colour of the flowers, etc. Specific type level division may be set as needed for an object, and is not limited in embodiments of this disclosure.

Step 231102, Determining, based on the first object point cloud, a first object boundary point cloud and a first object interior point cloud.

In some optional embodiments, the first object boundary point cloud may be determined through preconfigured point cloud boundary extracting algorithm or edge detecting algorithm, etc., and then, a point set in the first object point cloud other than the first object boundary point cloud may be determined as the first object interior point cloud. A specific mode of determining the first object boundary point cloud is not limited.

Step 231103, Sampling the first object boundary point cloud based on a third sampling density corresponding to the first object boundary point cloud, to obtain a second object boundary point cloud.

Due to better expression of the boundary of an object by the point cloud, a high density may be reserved for the boundary of the object, such that a clearer object boundary is displayed. Based on this, the third sampling density may be determined based on effects of displaying different object point clouds under different densities, and the first object boundary point cloud may be downsampled based on the third sampling density, to obtain the sparsified second object boundary point cloud, thereby reducing the number of points in an object boundary point cloud, and ensuring effective expression of an object boundary.

Step 231104, Sampling the first object interior point cloud based on a distance between a point in the first object interior point cloud and the first object boundary point cloud according to a density gradient rule, to obtain a second object interior point cloud.

Based on clear expression of an object boundary, using a small density for a point cloud close to a center of the object has less impact on the user's impression, and the closer the point cloud is to the center, the less the impact. Therefore, the first object interior point cloud may have a lowered density compared to the boundary point cloud, to further reduce the amount of point cloud data. The density gradient rule is that the density decreases gradually from the boundary of the object to the center of the object. The first object interior point cloud is sampled based on the density gradient rule, to obtain the second object interior point cloud, such that the density of the second object interior point cloud decreases gradually from the boundary to the center.

In some optional embodiments, the first object interior point cloud may be sampled based on a distance between the second object boundary point cloud and the point in the first object interior point cloud according to the density gradient rule, to obtain the second object interior point cloud.

Note that step 231103 and step 231104 are in no particular order.

Step 231105, Determining, based on the second object boundary point cloud and the second object interior point cloud, a sparsified second object point cloud corresponding to the first object point cloud.

The second object boundary point cloud and the second object interior point cloud may be combined, to obtain the sparsified second object point cloud.

Step 231106, Determining the third point cloud data based on the sparsified second object point cloud.

A first object point cloud may be downsampled based on a foregoing process, to obtain a corresponding sparsified second object point cloud, and then, the third point cloud data may be obtained based on the second object point cloud. For example, a first object point cloud in the second point cloud data is replaced with a corresponding sparsified second object point cloud, to obtain the third point cloud data.

With embodiments of this disclosure, by reserving a high density of the object boundary point cloud, and decreasing the density of the object interior point cloud gradually from the boundary to the center of the object, it is enabled to further reduce the amount of point cloud data while ensuring a clear object boundary, further improving display performance.

In some optional embodiments, the step 23110 of sparsifying the second point cloud data based on the type attribute of the point in the second point cloud data, to obtain third point cloud data includes:
determining, based on a current pose of the vehicle, a view range of a virtual camera configured for observing the driving environment; determining, based on the view range, a second sampling density of the second point cloud data; sampling the second point cloud data based on the second sampling density, to obtain intermediate point cloud data; then, determining, based on a type attribute of a point in the intermediate point cloud data, a first object point cloud corresponding to the type attribute; determining, based on the first object point cloud, a first object boundary point cloud and a first object interior point cloud; sampling the first object boundary point cloud based on a third sampling density corresponding to the first object boundary point cloud, to obtain a second object boundary point cloud; sampling the first object interior point cloud based on a distance between a point in the first object interior point cloud and the first object boundary point cloud according to a density gradient rule, to obtain a second object interior point cloud; determining, based on the second object boundary point cloud and the second object interior point cloud, a sparsified second object point cloud corresponding to the first object point cloud; and determining the third point cloud data based on the sparsified second object point cloud.

For a specific operation of obtaining the intermediate point cloud data, one may refer to the specific operation of obtaining the third point cloud data based on the second sampling density in a foregoing embodiment, and for a specific operation of obtaining the third point cloud data based on the intermediate point cloud data, one may refer to step 231101 to step 231106, which are not repeated here.

In some optional embodiments, for a specific operation of step 23102 of sparsifying the fused point cloud data based on a type attribute of a point in the fused point cloud data, to obtain the target fused point cloud data, one may refer to an operation of sparsification of step 23110 and a specific operation associated therewith in a foregoing embodiment. For example, it will suffice to replace the second point cloud data in a foregoing sparsification-related embodiment with the fused point cloud data, and replace the third point cloud data with the target fused point cloud data, which are not elaborated one by one here.

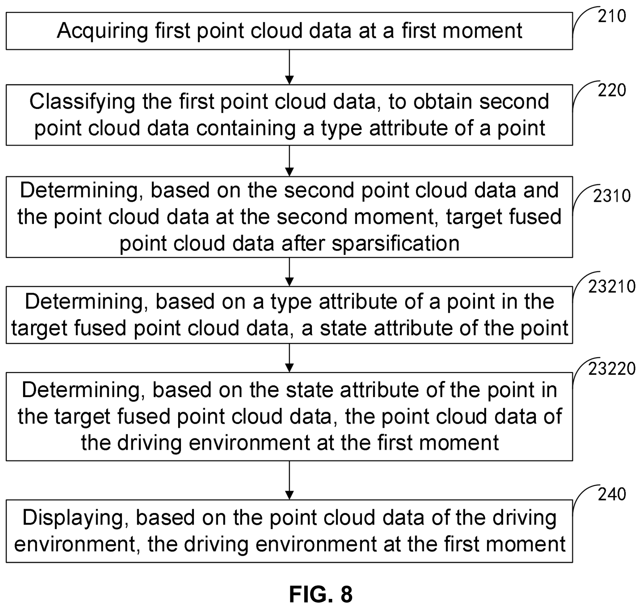

FIG. 8 is a schematic flowchart of a method for displaying a vehicle driving environment according to yet another illustrative embodiment of this disclosure.

In some optional embodiments, the step 2320 of determining, based on the target fused point cloud data, the point cloud data of the driving environment of the vehicle at the first moment may include steps as follows.

Step 23210, Determining, based on a type attribute of a point in the target fused point cloud data, a state attribute of the point.

In some optional embodiments, the target fused point cloud data may include point cloud data of the plurality of points. And state attributes of the points may be determined. In an embodiments, taking a point as an example for brevity, and the state attribute of the point includes at least one of a size attribute, a colour attribute, and a transparency attribute. The size attribute is configured for representing the distance of the point, that is, the size attribute of the point is determined based on a rule that an object visually appears larger at a close distance than it does at a faraway distance, to create a stronger sense of distance in displayed point cloud data. The colour attribute is configured for representing the colour of an object, to facilitate quickly identifying different objects by the user. The transparency attribute is configured for creating a stronger sense of perspective.

In some optional embodiments, the colour attribute of the point may be determined based on colour of an object in a real environment.

In some optional embodiments, the transparency attribute of the point may be determined based on height of the point relative to the ground.

In some optional embodiments, the size attribute of the point may be determined based on the distance of the point to an observing point. The observing point for example is the position of the virtual camera, to provide the user with a visual sense of distance.

In some optional embodiments, as point cloud data are sparsified to allow a certain space separation between the points, the principle of determining the size attributes of the points is that after inflating points based on their size attributes, the points will not interact with each other and will not affect the overall morphology of the object. Based on this, a maximum threshold of the size attributes of the points may be set, such that the size of a closest point does not exceed the maximum threshold.

Step 23220, Determining, based on the state attribute of the point in the target fused point cloud data, the point cloud data of the driving environment at the first moment.

The state attribute of the point in the target fused point cloud data may be fused with the target fused point cloud data, to obtain point cloud data containing the type attribute and the state attribute as the point cloud data of the driving environment.

With embodiments of this disclosure, by adding the state attributes for the points in the target fused point cloud data, it is enabled to further improve the effect of visual expression of the driving environment, improving visual experience of the user.

In some optional embodiments, taking a point as an example, the step 23210 of determining, based on a type attribute of a point in the target fused point cloud data, a state attribute of the point includes:
determining a point set corresponding to a type based on the type attribute of the point in the target fused point cloud data; performing, based on a distance between a point in the point set and the vehicle and a colour scheme corresponding to the type, colour gradient processing on the point set corresponding to the type, to determine a colour attribute corresponding to the point in the point set; and acquiring, based on the colour attribute corresponding to the point in the point set, the colour attribute of the point in the target fused point cloud data; and/or determining a height of the point in the target fused point cloud data relative to a preset plane, and performing transparency gradient processing on the target fused point cloud data based on the height of the point relative to the preset plane, to obtain the transparency attribute of the point; and/or determining a first position of a virtual camera configured for observing the driving environment, and performing, based on a distance between the point in the target fused point cloud data and the first position, size gradient processing on the point, to obtain the size attribute of the point; and determining the state attribute of the point based on at least one of the colour attribute, the transparency attribute, and the size attribute of the point in the target fused point cloud data.

The point set corresponding to the type may be extracted from the target fused point cloud data based on the type attribute of the point. The preset plane may be the ground or another plane parallel to the ground. In some optional embodiments, there are a plurality of points, and the corresponding type attributes, state attributes and point sets, etc. For brevity, only one point is taken as an example to illustrate the concept of the disclosure in the following, and the disclosure is not limited thereto.

In some optional embodiments, the colour scheme corresponding to the type may be set based on colour of an object of the type in an actual environment, and then colour gradient processing is performed on the point set in a range of the colour scheme corresponding to the type based on the distance between the point and the ego vehicle, to obtain colour values corresponding respectively to points at different distances, which are set as the colour attributes of the points. For example, for a tree type, a gradient from dark green to light green may be used for a crown part, and gradient processing may be performed on a trunk part using a colour scheme (such as greys) consistent with colour of the trunk. The colour scheme corresponding to the type and a direction of colour gradient (from dark to light or from light to dark) are not limited.

In some optional embodiments, the height of the point in the target fused point cloud data relative to the preset plane may be determined based on a distance of a coordinate of the point in a specified coordinate system (such as the coordinate system of the ego vehicle or the world coordinate system) to the preset plane. For example, in the coordinate system of the ego vehicle, the preset plane is a plane defined by z=0, and the z coordinate of a point is the height of the point relative to the preset plane. A gradient rule of performing transparency gradient processing based on the height may be that the higher the height is, the more transparent, that is, the higher the height is, the greater a transparency value, with the obtained transparency value of the point being set as the transparency attribute.

In some optional embodiments, the first position of the virtual camera may be set as needed for visual expression. Relative pose of the virtual camera relative to the ego vehicle may be configured in advance, the relative pose may include the first position of the camera and an observing direction (or the direction of the angle of view), and in the coordinate system of the ego vehicle, the relative pose is a pose of the virtual camera. The first position of the virtual camera is the observing point for generating the displayed picture, and a direction of the virtual camera is a direction in which the driving environment is observed. That is, the displayed driving environment is the driving environment of the vehicle seen from the observing point along the observing direction. Size gradient processing is performed on the point in the target fused point cloud data based on the principle that an object visually appears larger at a close distance than it does at a faraway distance, to obtain the size attribute of the point.

With embodiments of this disclosure, by determining the colour attribute of the point, colour of an object may further be displayed, to facilitate quickly identifying different objects in the environment by the user. By determining the transparency attribute of the point, an object located at a higher position is made more transparent, thereby enabling the user to see circumstances of an object located at a low position through an object located at a high position. By performing gradient processing on sizes of the points, it is enabled to produce a sense of distance that an object appears larger at a close distance than it does at a faraway distance, thereby producing a perspective effect of in 3D rendering of environment of human-machine interaction, further improving an effect of visual expression by a point cloud.

In some optional embodiments, the step 23210 of determining, based on a type attribute of a point in the target fused point cloud data, a state attribute of the point includes:

determining a point set corresponding to a type based on the type attribute of the point in the target fused point cloud data; performing colour gradient processing on the point set corresponding to the type based on a distance between a point in the point set and the vehicle and a colour scheme corresponding to the type, to determine a colour attribute corresponding to the point in the point set; acquiring, based on the colour attribute corresponding to the point in the point set, the colour attribute of the point in the target fused point cloud data; and determining the state attribute of the point based on the colour attribute of the point in the target fused point cloud data.

For a specific operation of the respective step, one may refer to a foregoing embodiment.

In some optional embodiments, the step 23210 of determining, based on a type attribute of a point in the target fused point cloud data, a state attribute of the point includes:
determining a height of the point in the target fused point cloud data relative to a preset plane; performing transparency gradient processing on the target fused point cloud data based on the height of the point relative to the preset plane, to obtain the transparency attribute of the point; and determining the state attribute of the point based on the transparency attribute of the point in the target fused point cloud data.

For a specific operation of the respective step, one may refer to a foregoing embodiment.

In some optional embodiments, the step 23210 of determining, based on a type attribute of a point in the target fused point cloud data, a state attribute of the point includes:
determining a first position of a virtual camera configured for observing the driving environment; performing, based on a distance between the point in the target fused point cloud data and the first position, size gradient processing on the point, to obtain the size attribute of the point; and determining the state attribute of the point based on the size attribute of the point in the target fused point cloud data.

For a specific operation of the respective step, one may refer to a foregoing embodiment.

In some optional embodiments, the step 23210 of determining, based on a type attribute of a point in the target fused point cloud data, a state attribute of the point includes:
determining the state attribute of the point based on the colour attribute and the size attribute of the point in the target fused point cloud data; or determining the state attribute of the point based on the colour attribute and the transparency attribute of the point; or determining the state attribute of the point based on the size attribute and the transparency attribute of the point; or determining the state attribute of the point based on the colour attribute, the size attribute, and the transparency attribute of the point. For a specific operation of determining the colour attribute, the size attribute, and the transparency attribute of the point, one may refer to a foregoing embodiment, which is not repeated here.

For a specific operation of the respective step, one may refer to a foregoing embodiment.

In some optional embodiments, based on any foregoing embodiment, the method according to embodiments of this disclosure may further include:
determining a view range of the virtual camera; determining, based on the view range, a first sub-point cloud covering a road surface from the target fused point cloud data; and determining, based on a preset transparency rule, a transparency attribute of a point in the first sub-point cloud.

Covering the road surface refers to that a road surface is covered by the point cloud of another object when looking at the road surface from the virtual camera. To allow the user to see the road surface, certain transparency may be set for the first sub-point cloud covering the road surface. The preset transparency rule may include a preset transparency value or a rule configured for determining a transparency value. The preset transparency value may be set as needed, which is not limited in embodiments of this disclosure. For example, the first sub-point cloud is made semitransparent, that is, the preset transparency value is 50%.

In some optional embodiments, a road surface point cloud may be determined based on the type attributes of the points; the complete road surface point cloud may be determined through planarity and continuity of the road surface; it may be determined, based on respective distances and directions of the road surface point cloud and another point cloud relative to the first position, whether the point cloud of another object covers the road surface, and then the first sub-point cloud covering the road surface may be determined. Alternatively, the road surface point cloud and the another point cloud are projected onto the image coordinate system of the virtual camera; for a road surface point and another point in an overlap area, if a first distance of the another point to the virtual camera is less than that of the road surface point, the another point is determined to be a point covering the road surface; and based on this, the first sub-point cloud covering the road surface is obtained. A specific mode of determining the first sub-point cloud covering the road surface is not limited.

With embodiments of this disclosure, by performing transparency processing on a sub-point cloud covering the road surface, it is enabled to lower coverage of the road surface by a point cloud, thereby improving visibility of the road surface.

In some optional embodiments, the determining, based on a preset transparency rule, a transparency attribute of a point in the first sub-point cloud may include:
determining, based on the type attribute of the point in the target fused point cloud data, a third object point cloud of an object; determining, based on the third object point cloud of the object and the first sub-point cloud, a target object point cloud distributed in the first sub-point cloud and an object completeness state corresponding to the target object point cloud; and in response to an object completeness state corresponding to the target object point cloud being complete, determining a transparency attribute of a point in the target object point cloud to be a preset transparency value; or in response to an object completeness state corresponding to the target object point cloud being incomplete, acquiring an object sub-point cloud belonging to the same object as the target object point cloud but not distributed in the first sub-point cloud, and performing transparency gradient transition processing on the target object point cloud and the object sub-point cloud, to obtain a transparency attribute of a point in the target object point cloud and the object sub-point cloud.

A specific operation of determining the third object point cloud is similar to the operation of determining the first object point cloud in a foregoing embodiment, which is not repeated here. The target object point cloud may be the third object point cloud or part of the points in the third object point cloud. The object completeness state corresponding to the target object point cloud is a state denoting whether the third object point cloud corresponding to the target object point cloud is completely in the first sub-point cloud, that is, whether the target object point cloud is a complete third object point cloud. The object completeness state includes a complete state and a not-complete (or incomplete) state.

In some optional embodiments, the number of target object point clouds may be one or more, that is, the first sub-point cloud may include the target object point cloud(s) of one or a plurality of objects. For example, in FIG. 3, parts of point clouds of a plurality of trees between a current road and an opposite road cover the surface of the opposite road, and the first sub-point cloud covering the road surface includes target object point clouds of the plurality of trees, which belongs to part of a third object point cloud of a tree, that is, the object completeness state of the target object point cloud is the incomplete state. If the object completeness state corresponding to the target object point cloud is the incomplete state, a remaining partial object sub-point cloud, which corresponds to the target object point cloud and which is not distributed in the first sub-point cloud, may be obtained from the corresponding third object point cloud; and transparency gradient transition processing may be performed on the target object point cloud and the remaining partial object sub-point cloud with a transition principle being that the transparency values decrease gradually to nontransparency starting from a boundary of the target object point cloud and the remaining partial object sub-point cloud, toward a side away from the target object point cloud, to obtain the transparency attribute of the point in the target object point cloud and the transparency attribute of the point in the remaining partial object sub-point cloud. In case that the object completeness state corresponding to the target object point cloud is the complete state, the transparency attribute of the target object point cloud may be determined as the preset transparency value.

In some optional embodiments, the point in the first sub-point cloud may be matched to the point in the target object point cloud, and the object completeness state corresponding to the target object point cloud may be determined based on a matching result.

With embodiments of this disclosure, for a point cloud of an object part of which covers the road surface, by making the part of the point cloud covering the road surface transparent, and performing transparency gradient transition processing on the part of the point cloud not covering the road surface and the part of the point cloud covering the road surface, smoothness of transparency of the same object is ensured, avoiding cliff-like transparency of the same object, such as one part being semitransparent, and another part nontransparent, thereby enabling to avoid a sense of fragmentation of the object, and ensuring visual experience of the user.

In some optional embodiments, the transparency attribute of the point in the first sub-point cloud covering the road surface may further be determined by performing transparency gradient processing combining the height of the point in the first sub-point cloud relative to the preset plane.

In some optional embodiments, on basis of determining the state attribute of the point in the target fused point cloud data, the first sub-point cloud covering the road surface may be determined; then, the transparency attribute of the point in the first sub-point cloud may be determined based on the preset transparency rule; the state attribute of the point in the target fused point cloud data may be updated based on the transparency attribute of the point in the first sub-point cloud, that is, the transparency attribute of the first sub-point cloud in the target fused point cloud may be updated; and the state attribute of the point in the target fused point cloud data may be determined based on the updated transparency attribute.

In some optional embodiments, the step 23120 of determining the target fused point cloud data based on the third point cloud data and the point cloud data at the second moment may include:
determining, based on a type attribute of a point in the point cloud data at the second moment, static point cloud data at t the second moment, and determining the target fused point cloud data based on the static point cloud data at the second moment and the third point cloud data.

In some optional embodiments, the above operation may be performed for each of the point cloud data at the second moment. Static point cloud data at the second moment refers to point cloud data in the point cloud data at the second moment which belong to a static object. The static object for example may include a building, a tree, a road surface, a curb, a traffic cone, a traffic light, etc.

In some optional embodiments, a type attribute belonging to a static object may be set in advance; and then, a point of a type attribute belonging to a static object may be extracted based on the type attribute of the point in the point cloud data at the second moment, to obtain the static point cloud data at the second moment.

In some optional embodiments, a type attribute belonging to a dynamic object may be set in advance; and then, a point of a type attribute belonging to a dynamic object may be removed based on the type attribute of the point in the point cloud data at the second moment, to obtain the static point cloud data at the second moment.

In some optional embodiments, through coordinate system transformation, the static point cloud data at the second moment may be transformed to the same coordinate system as the point cloud data at the first moment, and the target fused point cloud data may be obtained by performing point cloud combining, duplicate removal, etc., in the same coordinate system.

In some optional embodiments, the step 23101 of determining fused point cloud data based on the second point cloud data and the point cloud data at the second moment may include:
determining, based on a type attribute of a point in the point cloud data at the second moment, static point cloud data at the second moment, and determining the fused point cloud data based on the static point cloud data at the second moment and the second point cloud data.

For a specific operation of the respective step, one may refer to a foregoing embodiment, which is not repeated here.

With embodiments of this disclosure, in fusing point cloud data at a plurality of moments, by removing the dynamic point cloud data in the point cloud data at the second moment, it is enabled to avoid the problem of inaccurate position of the dynamic point cloud data at the first moment caused by movement of the dynamic object, thereby improving accuracy and effectiveness of the fused point cloud data.

In some optional embodiments, based on any foregoing embodiment, the method according to embodiments of this disclosure may further include caching at least one point cloud data of: the first point cloud data at the first moment, the second point cloud data, the third point cloud data, the target fused point cloud data, and the point cloud data of the driving environment of the vehicle at the first moment. By caching related point cloud data, it is enabled to provide historical point cloud data for displaying the driving environment at a subsequent moment of the first moment. For example, at a fourth moment (equivalent to a current first moment) after the first moment, point cloud data cached at the first moment become historical point cloud data (equivalent to current point cloud data at the second moment); and the driving environment at the fourth moment may be displayed combining the point cloud data at the fourth moment, the point cloud data at the first moment, and the point cloud data at the second moment, and so on, enabling to continuously display the overall driving environment around the ego vehicle as the vehicle drives.

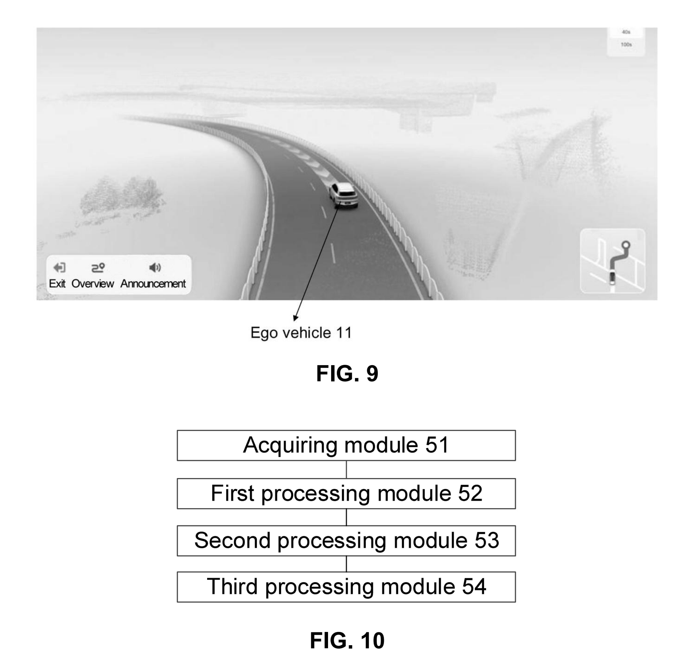

In some optional examples, FIG. 9 is a schematic diagram of a display interface for displaying a driving environment according to another illustrative embodiment of this disclosure. As shown in FIG. 9, based on the method according to embodiments of this disclosure, completeness of point cloud data in the entire field of view is ensured, thereby better creating a sense of a human-machine interface (HMI) world for the user, improving a sense of immersion of the user, and improving a sense of faith the user in an intelligent driving function. In actual application, colour of the object in the environment may be displayed in the display interface. For example, colour of an object is displayed based on colour attributes of points in point cloud data, thereby making morphology of the object more close to a real-world object, and performing efficient human-machine interaction expression.

Collection, storage, use, processing, transmission, provision, disclosure, etc., of user personal information as involved in the technical solution disclosed herein all comply with related laws and regulations and do not violate public order and good morals. Furthermore, collection and use of user personal information as involved in the technical solution disclosed herein are carried out with the user's knowledge and authorization, and do not involve the illegal acquisition or unlawful use of user personal information.

Respective embodiments of this disclosure may be implemented separately, or in any combination as long as it causes no conflict, specifics of which may be set as needed, and are not limited in this disclosure.

Any method for displaying a vehicle driving environment according to embodiments of this disclosure may be implemented by any appropriate device capable of data processing, including but not limited to an electronic device such as a terminal device, a server, etc. Alternatively, the any method for displaying a vehicle driving environment according to embodiments of this disclosure may be implemented by a processor. For example, the processor implements the any method for displaying a vehicle driving environment mentioned in embodiments of this disclosure by calling respective instructions stored in a memory, which is not elaborated hereinafter.

### Illustrative apparatus

FIG. 10 is a schematic structural diagram of an apparatus for displaying a vehicle driving environment according to an illustrative embodiment of this disclosure. The apparatus according to the embodiment may be configured for implementing the respective method embodiment according to this disclosure. The apparatus as shown in FIG. 10 may include: an acquiring module 51, a first processing module 52, a second processing module 53, and a third processing module 54.

The acquiring module 51 is configured for acquiring first point cloud data at a first moment.

The first processing module 52 is configured for classifying the first point cloud data, to obtain second point cloud data containing a type attribute of a point.

The second processing module 53 is configured for determining, based on the second point cloud data and point cloud data at a second moment, point cloud data of a driving environment of a vehicle at the first moment, wherein the second moment is a moment before the first moment.

The third processing module 54 is configured for displaying, based on the point cloud data of the driving environment, the driving environment at the first moment.

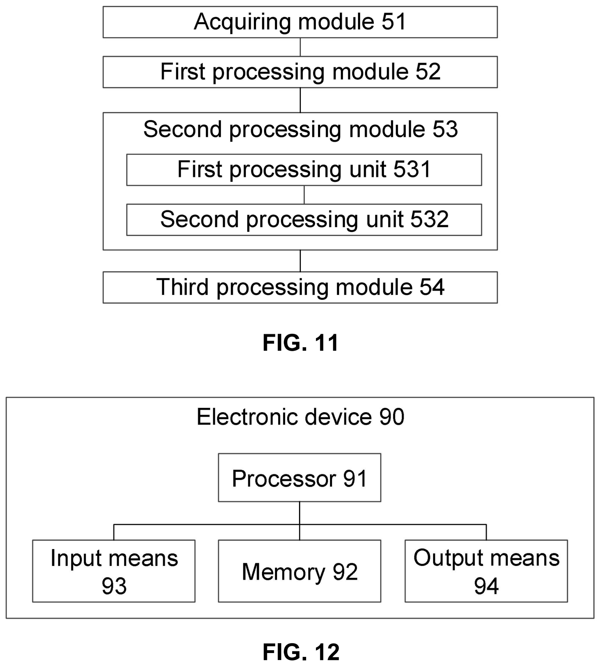

FIG. 11 is a schematic structural diagram of an apparatus for displaying a vehicle driving environment according to another illustrative embodiment of this disclosure.

In some optional embodiments, based on the embodiment shown in FIG. 10, as shown in FIG. 11, the second processing module 53 may include a first processing unit 531 and a second processing unit 532.

The first processing unit 531 is configured for determining, based on the second point cloud data and the point cloud data at the second moment, target fused point cloud data after sparsification.

The second processing unit 532 is configured for determining, based on the target fused point cloud data, the point cloud data of the driving environment of the vehicle at the first moment.

In some optional embodiments, the first processing unit 531 is specifically configured for:
sparsifying the second point cloud data based on the type attribute of the point in the second point cloud data, to obtain third point cloud data, and determining the target fused point cloud data based on the third point cloud data and the point cloud data at the second moment.

In some optional embodiments, the first processing unit 531 is specifically configured for:
determining fused point cloud data based on the second point cloud data and the point cloud data at the second moment, and sparsifying the fused point cloud data based on a type attribute of the point in the fused point cloud data, to obtain the target fused point cloud data.

In some optional embodiments, based on a foregoing embodiment, the first processing unit 531 is specifically configured for:
determining, based on the type attribute of the point in the second point cloud data, a first sampling density corresponding to the type attribute; and/or determining, based on a current pose of the vehicle, a view range of a virtual camera configured for observing the driving environment, and determining, based on the view range, a second sampling density of the second point cloud data; and sampling the second point cloud data based on the first sampling density and/or the second sampling density, to obtain the third point cloud data.

In some optional embodiments, the first processing unit 531 is specifically configured for:
determining, based on the type attribute of the point in the second point cloud data, a first sampling density corresponding to the type attribute; and sampling the second point cloud data based on the first sampling density, to obtain the third point cloud data.

In some optional embodiments, the first processing unit 531 is specifically configured for:
determining, based on a current pose of the vehicle, a view range of a virtual camera configured for observing the driving environment; determining, based on the view range, a second sampling density of the second point cloud data; and sampling the second point cloud data based on the second sampling density, to obtain the third point cloud data.

In some optional embodiments, the first processing unit 531 is specifically configured for:
determining, based on the type attribute of the point in the second point cloud data, a first sampling density corresponding to the type attribute; determining, based on a current pose of the vehicle, a view range of a virtual camera configured for observing the driving environment; determining, based on the view range, a second sampling density of the second point cloud data; and sampling the second point cloud data based on the first sampling density and the second sampling density, to obtain the third point cloud data.

In some optional embodiments, based on any foregoing embodiment, the first processing unit 531 is specifically configured for:
determining, based on the view range, sub-point cloud data of at least one level from the second point cloud data; and determining, based on a level of the sub-point cloud data, the second sampling density of the sub-point cloud data.

In some optional embodiments, based on any foregoing embodiment, the first processing unit 531 is specifically configured for:
determining, based on the type attribute of the point in the second point cloud data, a first object point cloud corresponding to the type attribute; determining, based on the first object point cloud, a first object boundary point cloud and a first object interior point cloud; sampling the first object boundary point cloud based on a third sampling density corresponding to the first object boundary point cloud, to obtain a second object boundary point cloud; sampling the first object interior point cloud based on a distance between a point in the first object interior point cloud and the first object boundary point cloud according to a density gradient rule, to obtain a second object interior point cloud; determining, based on the second object boundary point cloud and the second object interior point cloud, a sparsified second object point cloud corresponding to the first object point cloud; and determining the third point cloud data based on the sparsified second object point cloud.

In some optional embodiments, the first processing unit 531 is specifically configured for:
determining, based on a current pose of the vehicle, a view range of a virtual camera configured for observing the driving environment; determining, based on the view range, a second sampling density of the second point cloud data; sampling the second point cloud data based on the second sampling density, to obtain intermediate point cloud data; then, determining, based on a type attribute of a point in the intermediate point cloud data, a first object point cloud corresponding to the type attribute; determining, based on the first object point cloud, a first object boundary point cloud and a first object interior point cloud; sampling the first object boundary point cloud based on a third sampling density of the first object boundary point cloud, to obtain a second object boundary point cloud; sampling the first object interior point cloud based on a distance between a point in the first object interior point cloud and the first object boundary point cloud according to a density gradient rule, to obtain a second object interior point cloud; determining, based on the second object boundary point cloud and the second object interior point cloud, a sparsified second object point cloud corresponding to the first object point cloud; and determining the third point cloud data based on the sparsified second object point cloud.

In some optional embodiments, the second processing unit 532 is specifically configured for:
determining, based on a type attribute of a point in the target fused point cloud data, a state attribute of the point, wherein the state attribute includes at least one of a size attribute, a colour attribute, and a transparency attribute; and determining, based on the state attribute of the point in the target fused point cloud data, the point cloud data of the driving environment at the first moment.

In some optional embodiments, the second processing unit 532 is specifically configured for:
determining a point set corresponding to a type based on the type attribute of the point in the target fused point cloud data, performing, based on a distance between a point in the point set and the vehicle and a colour scheme corresponding to the type, colour gradient processing on the point set corresponding to the type, to determine a colour attribute corresponding to the point in the point set, and acquiring, based on the colour attribute corresponding to the point in the point set, the colour attribute of the point in the target fused point cloud data; and/or determining a height of the point in the target fused point cloud data relative to a preset plane, and performing transparency gradient processing on the target fused point cloud data based on the height of the point relative to the preset plane, to obtain the transparency attribute of the point; and/or determining a first position of a virtual camera configured for observing the driving environment, and performing, based on a distance between the point in the target fused point cloud data and the first position, size gradient processing on the point, to obtain the size attribute of the point; and determining the state attribute of the point based on at least one of the colour attribute, the transparency attribute, and the size attribute of the point in the target fused point cloud data.

In some optional embodiments, the second processing unit 532 is specifically configured for:
determining a point set corresponding to a type based on the type attribute of the point in the target fused point cloud data; performing, based on a distance between a point in the point set and the vehicle and a colour scheme corresponding to the type, colour gradient processing on the point set corresponding to the type, to determine a colour attribute corresponding to the point in the point set; acquiring, based on the colour attribute corresponding to the point in the point set, the colour attribute of the point in the target fused point cloud data; and determining the state attribute of the point based on the colour attribute of the point in the target fused point cloud data.

In some optional embodiments, the second processing unit 532 is specifically configured for:
determining a height of the point in the target fused point cloud data relative to a preset plane; performing transparency gradient processing on the target fused point cloud data based on the height of the point relative to the preset plane, to obtain the transparency attribute of the point; and determining the state attribute of the point based on the transparency attribute of the point in the target fused point cloud data.

In some optional embodiments, the second processing unit 532 is specifically configured for:
determining a first position of a virtual camera configured for observing the driving environment; performing, based on a distance between the point in the target fused point cloud data and the first position, size gradient processing on the point, to obtain the size attribute of the point; and determining the state attribute of the point based on the size attribute of the point in the target fused point cloud data.

In some optional embodiments, the second processing unit 532 is specifically configured for:
determining the state attribute of the point based on the colour attribute and the size attribute of the point in the target fused point cloud data; or determining the state attribute of the point based on the colour attribute and the transparency attribute of the point; or determining the state attribute of the point based on the size attribute and the transparency attribute of the point; or determining the state attribute of the point based on the colour attribute, the size attribute, and the transparency attribute of the point. For a specific operation of determining the colour attribute, the size attribute, and the transparency attribute of the point, one may refer to a foregoing embodiment, which is not repeated here.

In some optional embodiments, based on any foregoing embodiment, the second processing unit 532 is further configured for:
determining a view range of the virtual camera; determining, based on the view range, a first sub-point cloud covering a road surface from the target fused point cloud data; and determining, based on a preset transparency rule, a transparency attribute of a point in the first sub-point cloud.

In some optional embodiments, the second processing unit 532 is specifically configured for:
determining, based on the type attribute of the point in the target fused point cloud data, a third object point cloud of an object; determining, based on the third object point cloud of the object and the first sub-point cloud, a target object point cloud distributed in the first sub-point cloud and an object completeness state corresponding to the target object point cloud; and in response to an object completeness state corresponding to the target object point cloud being complete, determining a transparency attribute of a point in the target object point cloud to be a preset transparency value; or in response to an object completeness state corresponding to the target object point cloud being incomplete, acquiring an object sub-point cloud belonging to the same object as the target object point cloud but not distributed in the first sub-point cloud, and
performing transparency gradient transition processing on the target object point cloud and the object sub-point cloud, to obtain a transparency attribute of a point in the target object point cloud and the object sub-point cloud.

In some optional embodiments, the first processing unit 531 is specifically configured for:
determining, based on a type attribute of a point in point cloud data at the second moment, static point cloud data at the second moment; and determining the target fused point cloud data based on the static point cloud data at the second moment and the third point cloud data.

In some optional embodiments, the first processing unit 531 is specifically configured for:
determining, based on a type attribute of a point in point cloud data at the second moment, static point cloud data at the second moment, and determining the fused point cloud data based on the static point cloud data at the second moment and the second point cloud data.

In some optional embodiments, based on any foregoing embodiment, the second processing module 53 may further be configured for caching at least one point cloud data of: the first point cloud data at the first moment, the second point cloud data, the third point cloud data, the target fused point cloud data, or the point cloud data of the driving environment of the vehicle at the first moment.

Respective embodiments of this disclosure may be implemented individually, or implemented in a mode of any combination as long as it causes no conflict, specifics of which may be set as needed, and are not limited in this disclosure.

For beneficial technical effects corresponding to the illustrative embodiments of this apparatus, one may refer to the respective beneficial technical effects in the "Illustrative method" section described above, which are not repeated here.

### Illustrative electronic device

FIG. 12 is a structural diagram of an electronic device according to embodiments of this disclosure, the electronic device including at least one processor 91 and a memory 92.

The processor 91 may be a central processing unit (CPU) or another form of processing unit having a data processing capability and/or an instruction execution capability, and may control other components in the electronic device 90 to implement desired functions.

The memory 92 may include one or more computer program products, which may include various forms of computer-readable storage media, such as a volatile memory and/or a non-volatile memory. The volatile memory may include, for example, random access memory (RAM) and/or cache. The nonvolatile memory may include, for example, read-only memory (ROM), hard disk, flash memory, etc. One or more computer program instructions may be stored on the computer-readable storage medium. The processor 91 may execute one or more of the program instructions to implement the method according to the various embodiments of this disclosure that are described above, and/or other desired functions.

In an example, the electronic device 90 may further include an input means 93 and an output means 94. These components are connected to each other through a bus system and/or another form of connection mechanism (not shown).

The input means 93 may further include for example a touchscreen, a microphone, various sensors, etc. A sensor for example may include an image sensor (such as a camera, a cam, etc.), LIDAR, millimeter-wave radar, ultrasonic radar, a positioning sensor, a pressure sensor, an air quality sensor, a temperature sensor, etc. The image sensor, LIDAR, millimeter-wave radar, ultrasonic radar, etc., may be configured for perceiving surrounding environments, that is, detecting a dynamic object and/or static object in surrounding environment. The dynamic object and/or static object for example may include a static object such as a lane line, a curb, an arrow, a signboard, a tree, a building, etc.; and a dynamic object, such as a surround vehicle, a pedestrian, a cyclist, etc. The positioning sensor is configured for positioning a mobile device (such as the ego vehicle, a robot, etc.) in which the electronic device is located. The positioning sensor for example may include an inertial measurement unit (IMU for short), a global positioning system (GPS for short), etc. The pressure sensor may be configured for detecting seat pressure. The temperature sensor may be configured for detecting temperature in a vehicle cockpit. The air quality sensor may be configured for detecting air quality in the vehicle cockpit.

The output means 94 may output various information to the outside, and may include, for example, a display, a speaker, and a communication network and a remote output device connected thereto, etc.

For simplicity, FIG. 12 shows only some of components in the electronic device 90 that are related to this disclosure, and components such as a bus and an input/output interface are omitted. In addition, according to specific application situations, the electronic device 90 may further include any other appropriate components.

### Illustrative computer program product and computer-readable storage medium

In addition to the foregoing method and device, embodiments of this disclosure may also relate to a computer program product, which includes computer program instructions. When the instructions are run by a processor, the processor is enabled to perform the steps of the method according to the embodiments of this disclosure, which are described in the "Illustrative method" section of this specification.

The computer program product may be program code, written in one or any combination of a plurality of programming languages, which is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, embodiments of this disclosure may further relate to a computer-readable storage medium storing computer program instructions thereon, which, when executed by a processor, cause the processor implement the steps of the method according to the embodiments of this disclosure, which are described in the "Illustrative method" section as described above.

The computer-readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination thereof. More specific examples (a non-exhaustive list) of the readable storage medium include: an electrical connection having one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination thereof.

Basic principles of this disclosure are described above in combination with specific embodiments. However, advantages, superiorities, effects, etc., mentioned in this disclosure are merely examples but are not for limitation, and it cannot be considered that these advantages, superiorities, effects, etc., are necessary for each embodiment of this disclosure. Moreover, specific details described above are merely for examples and for ease of understanding, rather than limitations. The details described above do not limit the present disclosure to being implemented with the aforementioned specific details.

A person skilled in the art may make various modifications and variations to this disclosure without departing from the spirit and the scope of this disclosure. In this way, if these modifications and variations of this disclosure fall within the scope of the claims and equivalent technologies of the claims of this disclosure, this disclosure intends to include these modifications and variations.

## Claims

1. A method for displaying a vehicle driving environment, **characterized by** including:
acquiring (210) first point cloud data at a first moment;
classifying (220) the first point cloud data, to obtain second point cloud data containing a type attribute of a point;
determining (230), based on the second point cloud data and point cloud data at a second moment, point cloud data of a driving environment of a vehicle at the first moment, wherein the second moment is a moment before the first moment; and
displaying (240), based on the point cloud data of the driving environment, the driving environment at the first moment.

2. The method according to claim 1, wherein the determining (230), based on the second point cloud data and point cloud data at a second moment, point cloud data of a driving environment of a vehicle at the first moment includes:
determining (2310), based on the second point cloud data and the point cloud data at the second moment, target fused point cloud data after sparsification; and
determining (2320), based on the target fused point cloud data, the point cloud data of the driving environment of the vehicle at the first moment.

3. The method according to claim 2, wherein the determining (2310), based on the second point cloud data and the point cloud data at the second moment, target fused point cloud data after sparsification includes:
sparsifying (23110) the second point cloud data based on the type attribute of the point in the second point cloud data, to obtain third point cloud data, and
determining (23120) the target fused point cloud data based on the third point cloud data and the point cloud data at the second moment; or
determining (23101) fused point cloud data based on the second point cloud data and the point cloud data at the second moment, and
sparsifying (23102) the fused point cloud data based on a type attribute of the point in the fused point cloud data, to obtain the target fused point cloud data.

4. The method according to claim 3, wherein the sparsifying (23110) the second point cloud data based on the type attribute of the point in the second point cloud data, to obtain third point cloud data includes:
determining, based on the type attribute of the point in the second point cloud data, a first sampling density corresponding to the type attribute; and/or
determining, based on a current pose of the vehicle, a view range of a virtual camera configured for observing the driving environment, and
determining, based on the view range, a second sampling density of the second point cloud data; and
sampling the second point cloud data based on the first sampling density and/or the second sampling density, to obtain the third point cloud data.

5. The method according to claim 4, wherein the determining, based on the view range, a second sampling density of the second point cloud data includes:
determining, based on the view range, sub-point cloud data of at least one level from the second point cloud data; and
determining, based on a level of the sub-point cloud data, the second sampling density corresponding to the sub-point cloud data.

6. The method according to claim 3, wherein the sparsifying (23110) the second point cloud data based on the type attribute of the point in the second point cloud data, to obtain third point cloud data includes:
determining (231101), based on the type attribute of the point in the second point cloud data, a first object point cloud corresponding to the type attribute;
determining (231102), based on the first object point cloud, a first object boundary point cloud and a first object interior point cloud;
sampling (231103) the first object boundary point cloud based on a third sampling density corresponding to the first object boundary point cloud, to obtain a second object boundary point cloud;
sampling (231104) the first object interior point cloud based on a distance between a point in the first object interior point cloud and the first object boundary point cloud according to a density gradient rule, to obtain a second object interior point cloud;
determining (231105), based on the second object boundary point cloud and the second object interior point cloud, a sparsified second object point cloud corresponding to the first object point cloud; and
determining (231106) the third point cloud data based on the sparsified second object point cloud.

7. The method according to any one of claims 2 to 6, wherein the determining (2320), based on the target fused point cloud data, the point cloud data of the driving environment of the vehicle at the first moment includes:
determining (23210), based on a type attribute of a point in the target fused point cloud data, a state attribute of the point, wherein the state attribute includes at least one of a size attribute, a colour attribute, and a transparency attribute; and
determining (23220), based on the state attribute of the point in the target fused point cloud data, the point cloud data of the driving environment at the first moment.

8. The method according to claim 7, wherein the determining (23210), based on a type attribute of a point in the target fused point cloud data, a state attribute of the point includes:
determining a point set corresponding to a type based on the type attribute of the point in the target fused point cloud data ;
performing, based on a distance between a point in the point set and the vehicle and a colour scheme corresponding to the type, colour gradient processing on the point set corresponding to the type, to determine a colour attribute corresponding to the point in the point set; and acquiring, based on the colour attribute corresponding to the point in the point set, the colour attribute of the point in the target fused point cloud data; and/or
determining a height of the point in the target fused point cloud data relative to a preset plane; and performing transparency gradient processing on the target fused point cloud data based on the height of the point relative to the preset plane, to obtain the transparency attribute of the point; and/or
determining a first position of a virtual camera configured for observing the driving environment; and performing, based on a distance between the point in the target fused point cloud data and the first position, size gradient processing on the point, to obtain the size attribute of the point; and
determining the state attribute of the point based on at least one of the colour attribute, the transparency attribute, and the size attribute of the point in the target fused point cloud data.

9. The method according to claim 8, further including:
determining a view range of the virtual camera;
determining, based on the view range, a first sub-point cloud covering a road surface from the target fused point cloud data; and
determining, based on a preset transparency rule, a transparency attribute of a point in the first sub-point cloud.

10. The method according to claim 9, wherein the determining, based on a preset transparency rule, a transparency attribute of a point in the first sub-point cloud includes:
determining, based on the type attribute of the point in the target fused point cloud data, a third object point cloud of an object;
determining, based on the third object point cloud of the object and the first sub-point cloud, a target object point cloud distributed in the first sub-point cloud and an object completeness state corresponding to the target object point cloud; and
in response to an object completeness state corresponding to the target object point cloud being complete, determining a transparency attribute of a point in the target object point cloud to be a preset transparency value; or
in response to an object completeness state corresponding to the target object point cloud being incomplete, acquiring an object sub-point cloud belonging to the same object as the target object point cloud but not distributed in the first sub-point cloud, and
performing transparency gradient transition processing on the target object point cloud and the object sub-point cloud, to obtain a transparency attribute of a point in the target object point cloud and the object sub-point cloud.

11. The method according to any one of claims 3 to 6, wherein the determining the target fused point cloud data based on the third point cloud data and the point cloud data at the second moment includes:
determining, based on a type attribute of a point in the point cloud data at the second moment, static point cloud data at the second moment, and
determining the target fused point cloud data based on the static point cloud data at the second moment and the third point cloud data; or
the determining fused point cloud data based on the second point cloud data and the point cloud data at the second moment includes:
determining, based on a type attribute of a point in the point cloud data at the second moment, static point cloud data at the second moment, and
determining the fused point cloud data based on the static point cloud data at the second moment and the second point cloud data.

12. An apparatus for displaying a vehicle driving environment, **characterized by** including:
an acquiring module (51), configured for acquiring first point cloud data at a first moment;
a first processing module (52), configured for classifying the first point cloud data, to obtain second point cloud data containing a type attribute of a point;
a second processing module (53), configured for determining, based on the second point cloud data and point cloud data at a second moment, point cloud data of a driving environment of a vehicle at the first moment, wherein the second moment is a moment before the first moment; and
a third processing module (54), configured for displaying, based on the point cloud data of the driving environment, the driving environment at the first moment.

13. The apparatus according to claim 12, wherein the second processing module (53) includes: and.
a first processing unit (531), configured for determining, based on the second point cloud data and the point cloud data at the second moment, target fused point cloud data after sparsification; and
a second processing unit (532), configured for determining, based on the target fused point cloud data, the point cloud data of the driving environment of the vehicle at the first moment.

14. A computer-readable storage medium, **characterized by** storing a computer program thereon, which, when executed by a processor, causes the processor to implement the method according to any one of claims 1 to 11.

15. An electronic device (90), **characterized by** including:
a processor (91); and
a memory (92), configured for storing processor-executable instructions,
wherein the processor (91) is configured for reading from the memory (92) and executing the processor-executable instructions to implement the method according to any one of claims 1 to 11.
